# FASCICULE DE BREVET EUROPEEN

(11) **EP 0 648 523 B1**
(45) Date de publication et mention de la délivrance du brevet: **04.03.1998**
(21) Numéro de dépôt: 94401903.3
(22) Date de dépôt: 26.08.1994
(51) Int. Cl.: B01D 19/00

(54) **Dispositif et procédé de dégazage pour circuit hydraulique**
Vorrichtung und Verfahren zum Entgasen eines Hydraulikkreislaufs
Device and process for degasing a hydraulic circuit

(30) Priorité: 19.10.1993 FR 9312433
(43) Date de publication de la demande: 19.04.1995
(73) Titulaire: POMPES SALMSON Société Anonyme à directoire dite:, 92504 Rueil Malmaison (FR)
(72) Inventeur: Cournee, Michel, F-53810 Change (FR); Fournier, Alain, F-53000 Laval (FR); Hetet, François, F-53940 St. Berthevin (FR); Pottier, Xavier, F-53970 Montigne le Brillant (FR)
(74) Mandataire: Hirsch, Marc-Roger

(56) Documents cités:
- DE-A- 2 303 713
- DE-A- 3 022 420
- DE-U- 6 948 644
- FR-A- 2 405 083

## Description

La présente invention a pour objet un dispositif ainsi qu'un procédé de dégazage pour circuit hydraulique.

Dans un circuit hydraulique, tel que par exemple un circuit de chauffage central ou tout autre circuit comportant une pompe, il est indispensable de prévoir un système de dégazage du fluide.

Des systèmes de dégazage ont déjà été proposés. Ces dispositifs sont constitués d'un dégazeur, couplé à un purgeur d'air. Par exemple, le dégazeur peut être constitué d'un bol muni d'une grille; la circulation du liquide à dégazer à travers la grille arrête les bulles d'air. Celles-ci s'accumulent et sont ensuite éliminées par le purgeur d'air.

D'autres dégazeurs, appelés dégazeurs à vortex, exploitent le fait que, dans un liquide en tourbillon, les éventuelles bulles d'air ont tendance à se rassembler au centre du tourbillon. Le passage du liquide dans une chambre cylindrique verticale, présentant des canalisations d'entrée et de sortie sensiblement horizontales et tangentes à la paroi du cylindre, permet de créer un tourbillon ou vortex autour de l'axe du cylindre. Les bulles d'air s'y regroupent et la colonne d'air ainsi formée peut être évacuée grâce à un purgeur d'air placé au-dessus de la chambre cylindrique. Un tel dispositif de dégazage à vortex est décrit dans le brevet européen 27178. Dans ce document, une chambre cylindrique d'axe vertical est disposée au voisinage de l'aspiration de la pompe. Le liquide arrive au sommet de la chambre cylindrique et descend vers l'orifice d'aspiration en formant un tourbillon. Un purgeur est disposé au sommet de la chambre cylindrique, au-dessus de l'axe du cylindre et donc du tourbillon où se regroupent les bulles d'air.

Un autre dégazeur du même type est décrit dans le brevet français n° 2 175 302. Dans ce document, il est proposé d'utiliser au voisinage d'une pompe une chambre de dégazage cylindrique à vortex, surmontée d'un purgeur, un orifice inférieur de la chambre débouche dans une chambre auxiliaire donnant sur l'orifice d'aspiration de la pompe. Un tube coudé détourne une partie du liquide refoulé par la pompe vers un orifice situé dans le haut de la chambre de dégazage.

On connait aussi par la demande FR-A-2 405 083 un séparateur liquide-air dans lequel le liquide à traiter circule depuis une entrée (10) dans une première zône d'une chambre (8) puis dans une deuxième zone de cette chambre dans laquelle est créé un vortex avant de sortir du dispositif au travers d'une pompe. Les figures du document, notamment, peuvent inviter à considérer qu'une certaine séparation partielle par densité a lieu dans ladite première zone de la chambre mais, en tout état de cause, l'ensemble du fluide à traiter passe par la zône où est créé le vortex avant sa sortie du dispositif.

Ces différents dispositifs présentent les inconvénients suivants. Ils ne sont efficaces que s'ils présentent un volume important et sont donc généralement encombrants. Ainsi, le volume d'un dégazeur à vortex est généralement proportionnel au débit du liquide à dégazer. En outre, les dispositifs connus induisent aussi dans le circuit hydraulique une perte de charge assez importante. Dans le cas où seule une partie du fluide passe dans le dispositif connu, comme c'est par exemple suggéré dans le brevet français 2 175 302, le dégazage n'est efficace qu'après qu'une partie importante du fluide soit passée dans le dispositif: l'efficacité du dispositif est donc assez restreinte.

Le problème de la présente invention est donc de concilier les exigences de faible volume et de grande efficacité des dispositifs de dégazage.

L'invention permet de pallier les inconvénients susmentionnés des dispositifs connus. Elle fournit un dispositif de dégazage compact et efficace. L'invention permet un dégazage efficace, avec une faible perte de charge.

L'invention a pour objet un dispositif de dégazage d'un fluide, comprenant des moyens d'admission de fluide à dégazer et des moyens de refoulement de fluide dégazé, un séparateur vortex dont la sortie est reliée auxdits moyens de refoulement, et qui est surmonté d'un purgeur d'air ledit dispositif de dégazage comprenant en outre une chambre de séparation séparée dudit vortex dont l'entrée est reliée auxdits moyens d'admission du fluide à dégazer et qui présente au moins une sortie distincte reliée audit séparateur vortex et une sortie reliée aux dits moyens de refoulement, de manière à ce que, en fonctionnement, le flux issu de ladite sortie distincte rejoigne en aval dudit séparateur vortex le flux issu de ce séparateur.

Selon un mode de réalisation de la présente invention, la chambre est une chambre de séparation par densité.

Selon un autre mode de réalisation de l'invention, la chambre présente en outre dans sa partie supérieure une sortie reliée au purgeur d'air.

Selon encore un mode de réalisation de l'invention, le dispositif présente des moyens de réglage du rapport entre d'une part le débit entre ladite chambre de séparation et ledit séparateur vortex et d'autre part le débit entre ladite chambre de séparation et lesdits moyens de refoulement.

L'invention concerne également un procédé de dégazage d'un fluide, par formation d'un tourbillon dans ledit fluide, caractérisé en ce que le fluide à dégazer est d'abord séparé en un flux faiblement chargé en gaz et en un flux fortement chargé en gaz, et en ce que seul le flux fortement chargé en gaz est dégazé par formation d'un tourbillon dans une chambre (2), lesdits flux ne se rejoignant qu'en aval de ladite chambre.

Selon un mode de mise en oeuvre du procédé de l'invention, le flux faiblement chargé en gaz est séparé par densité dudit flux fortement chargé en gaz.

Les autres caractéristiques et avantages de la présente invention apparaîtront à la lecture de la description qui suit, donnée à titre d'exemple et en référence aux figures annexées, qui montrent:
- figure 1 une vue schématique d'un dispositif selon l'invention;
- figure 2 une vue en coupe verticale d'un dispositif selon l'invention, destiné à être couplé à une pompe;
- figure 3 une vue du dispositif de la figure 2, en coupe dans le plan B-B de la figure 2;
- figure 4 une vue du dispositif de la figure 2, en coupe dans le plan C-C de la figure 2;

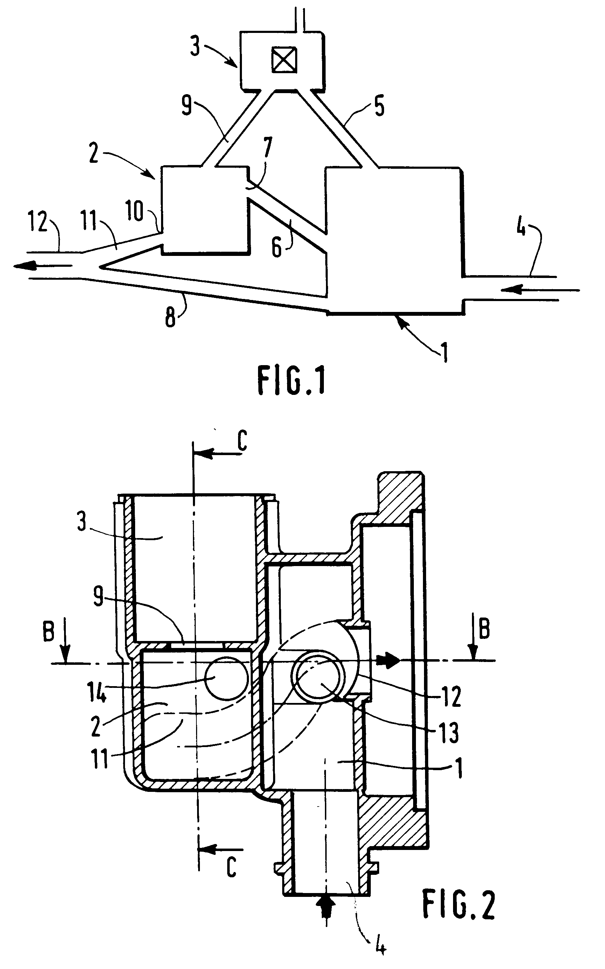

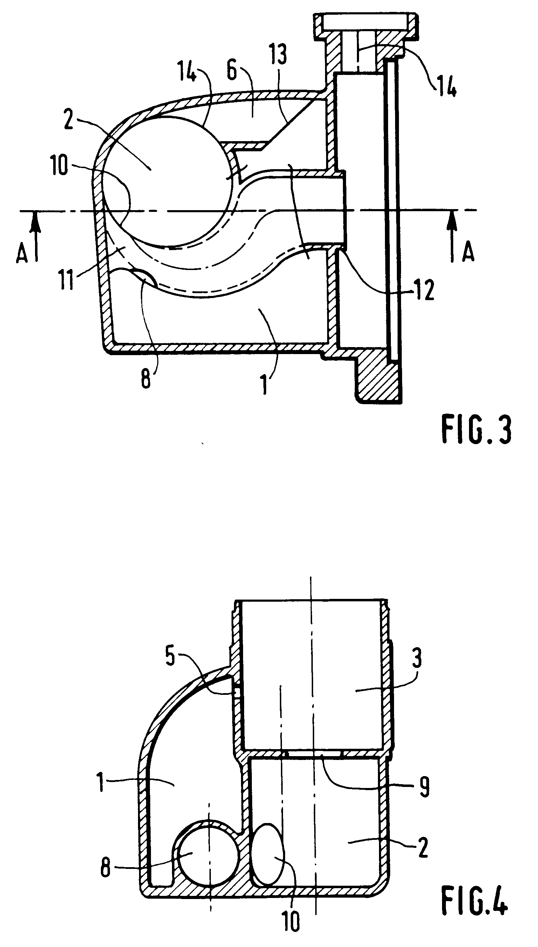

La figure 1 montre une vue schématique d'un dispositif selon l'invention. Le dispositif de la figure 1 comprend une chambre de séparation par densité 1, un séparateur vortex 2 et un purgeur d'air 3. Le fluide à dégazer arrive au dispositif de l'invention par une canalisation d'arrivée 4 qui débouche dans la chambre de séparation par densité 1. A la partie supérieure de la chambre 1, débouche une extrémité d'une canalisation 5 dont l'autre extrémité est reliée au purgeur d'air 3. Dans la partie médiane de la chambre 1, débouche une canalisation 6 dont l'autre extrémité est reliée à une entrée 7 du séparateur vortex 2. Enfin, à la partie inférieure de la chambre 1, débouche une canalisation 8.

Le séparateur vortex 2 est constitué suivant le principe connu. Il présente une entrée 7 reliée à la canalisation 6 provenant de la partie médiane de la chambre 1. Une canalisation 9 débouche au sommet du séparateur vortex 2, au-dessus du lieu de formation du tourbillon et relie le séparateur vortex 2 au purgeur d'air 3. Enfin, le séparateur vortex 2 présente une sortie 10 reliée à une canalisation 11. Le séparateur vortex 2 de la figure 1 présente une entrée 7 située dans sa partie supérieure, et une sortie 10 située dans sa partie inférieure. Une configuration inverse serait tout aussi possible.

Le purgeur 3, de façon connue en soi, est susceptible d'évacuer vers l'extérieur du circuit l'air qu'il contient. Le purgeur 3 peut, par exemple, être constitué d'un mécanisme à flotteur.

Le fluide dégazé par le dispositif selon l'invention est refoulé par une canalisation de refoulement 12 constituée par la réunion de la canalisation 11 de sortie du séparateur 2 et de la canalisation 8 provenant de la partie inférieure de la chambre 1.

Le fonctionnement du dispositif selon l'invention est le suivant. Le fluide à dégazer arrive dans la chambre de séparation 1. Cette chambre présente une section beaucoup plus importante que la canalisation d'entrée 4; elle a en outre une forme adaptée permettant l'agglomération de petites bulles de gaz. Cette forme peut être quelconque. Par exemple, on peut utiliser une forme sensiblement rectangulaire, la plus grande dimension du rectangle étant placée verticalement. Lorsque le fluide provenant de la canalisation d'arrivée 4 pénètre dans la chambre 1, sa vitesse diminue brutalement; les bulles de gaz qu'il contient s'agglomèrent et se déplacent du fait de leur densité vers la partie supérieure de la chambre 1.

Trois flux se forment donc dans la chambre 1. Un flux de gaz ou de fluide fortement chargé en gaz se forme dans la partie supérieure de la chambre 1 et est évacué vers le purgeur d'air 3 par la canalisation 5. Un flux de fluide fortement dégazé se forme dans la partie inférieure de la chambre 1 et est évacué vers le refoulement du dispositif de dégazage. Un flux de fluide partiellement dégazé se forme dans la partie médiane de la chambre 1 et est évacué vers le séparateur vortex 2 par la canalisation 6. Le dégazage dans le séparateur vortex 2 est d'autant plus efficace que les bulles de gaz du fluide ont commencé à se regrouper lors du passage dans la chambre 1. De la sorte, le fluide fortement dégazé ne passe pas par le séparateur vortex et le volume de celui-ci peut être réduit par rapport aux dispositifs connus. L'efficacité du dispositif selon l'invention est assurée par le passage du fluide partiellement dégazé par le séparateur vortex. Ceci assure un dégazage poussé du fluide refoulé par le dispositif de l'invention.

Les proportions des divers flux peuvent être ajustés en fonction de l'application du dispositif et du degré de dégazage à obtenir. Pour cela, on peut prévoir sur les différentes canalisations des moyens de réglage du débit, tels que des robinets de réglage. Le volume du séparateur vortex est défini en fonction du débit total de fluide et de la proportion des différents flux.

L'évacuation du fluide fortement chargé en gaz depuis la partie supérieure de la chambre 1 vers le purgeur d'air 3 est favorisée par la différence de pression entre ladite chambre 1 et le séparateur vortex 2 due aux différentes de vitesses dans la chambre 1 et dans le séparateur 2; le fluide fortement chargé en gaz s'écoule donc naturellement de la chambre 1 vers le purgeur 2 d'air 3. Cette différence de pression ne nuit en rien à l'efficacité du séparateur vortex 2.

La figure 2 montre une vue en coupe verticale d'un dispositif selon l'invention, destiné à être couplé à une pompe. Le dispositif de la figure 2 comprend une canalisation d'entrée 4, et des moyens de refoulement 12. Les moyens de refoulement 12 sont destinés à être montés sur une volute de pompe. La canalisation d'entrée 4 débouche dans la partie inférieure d'une chambre de séparation par densité 1. Le dispositif de la figure 2 comprend en outre un séparateur vortex 2, et un purgeur d'air 3, disposé au dessus du séparateur vortex. La chambre 1 présente dans sa partie médiane un orifice 13 constituant une extrémité d'une canalisation 6. Cette canalisation est mieux visible sur la figure 3, et son autre extrémité 14 débouche dans la partie supérieure du séparateur vortex 2. Un orifice 9 au sommet du séparateur vortex 2 débouche dans le purgeur d'air 3. Sur la figure 2 est représenté en traits pointillés la canalisation 11 de sortie du séparateur vortex 2, qui débouche dans les moyens de refoulement 12. Cette canalisation se situe en fait en avant du plan de la figure 2.

La figure 3 montre une vue du dispositif de la figure 2, en coupe dans le plan B-B de la figure 2; on reconnaît sur la figure 3, avec les mêmes références numériques, la chambre de séparation 1, le séparateur vortex 2, la canalisation 6 reliant la partie médiane de la chambre 1 et le haut du séparateur vortex, la canalisation 11 de sortie du séparateur vortex 2 et les moyens de refoulement 12. Apparaît en outre sur la figure 3 le passage 8 entre la partie inférieure de la chambre de séparation 1 et les moyens de refoulement 12. Comme expliqué en référence à la figure 1, le flux de sortie du séparateur vortex 2 provenant de la canalisation 11, et le flux fortement dégazé provenant de la partie inférieure de la chambre de séparation 1 par l'orifice 8 se réunissent dans les moyens de refoulement 12. La référence 10 indique la sortie du séparateur vortex 2. Le plan AA de la figure 3 est le plan dans lequel la coupe de la figure 2 est réalisée. On voit aussi sur la figure 3 la sortie 14 de la volute de pompe sur laquelle est monté le dispositif de dégazage.

La figure 4 montre une vue du dispositif de la figure 2, en coupe dans le plan C-C de la figure 2. On retrouve sur la figure 4 les éléments des figures 2 et 3, qu'il n'est pas nécessaire de détailler de nouveau. Apparaît sur la figure 4 un orifice 5 de communication entre la partie supérieure de la chambre de séparation 1 et le purgeur d'air 3. Par cet orifice passe de la chambre 1 vers le purgeur 3 un flux de fluide très fortement chargé en gaz.

Le fonctionnement du dispositif de dégazage représenté sur les figures 2 à 4 se déduit de la description donnée en référence à la figure 1, qu'il n'est pas nécessaire de reproduire. Le dispositif représenté sur les figures 2 à 4 est destiné à être monté en aval d'une pompe, et est tout particulièrement adapté, par son efficacité et sa compacité, à être monté sur une pompe de circulation pour circuit de chauffage.

Bien entendu, la présente invention n'est pas limitée aux modes de réalisation décrits et représentés mais elle est susceptible de nombreuses variantes accessibles à l'homme de l'art sans que l'on ne s'écarte de l'esprit de l'invention. En particulier, la chambre de séparation pourrait fonctionner suivant un autre principe que la séparation par densité. Elle pourrait par exemple être constituée d'un séparateur vortex, présentant une entrée de fluide dans sa partie supérieure (respectivement inférieure), une sortie de fluide très dégazé dans sa partie inférieure (respectivement supérieure) et une sortie de fluide partiellement dégazé dans sa partie médiane. Par ailleurs, le séparateur vortex est surmonté d'un purgeur d'air: le purgeur d'air peut, comme dans le dispositif des figures 2 à 4 être disposé immédiatement au-dessus du séparateur vortex; il peut aussi, comme représenté à la figure 1, être relié au séparateur vortex par une canalisation. Le terme "surmonté" ne doit pas être limité à l'un des ces deux modes de réalisation.

## Revendications

1. Dispositif de dégazage d'un fluide, comprenant des moyens d'admission (4) de fluide à dégazer et des moyens de refoulement (12) de fluide dégazé, un séparateur vortex (2) dont la sortie est reliée auxdits moyens de refoulement (12), et qui est surmonté d'un purgeur d'air (3), ledit dispositif de dégazage étant caractérisé en ce qu'il comprend en outre une chambre de séparation (1) séparée dudit séparateur vortex (2) dont l'entrée est reliée aux dits moyens d'admission (4) du fluide à dégazer et qui présente au moins une sortie distincte (8) reliée à une entrée dudit séparateur vortex (2) et une sortie reliée aux dits moyens de refoulement (12), de manière en ce que, en fonctionnement, le flux issu de ladite sortie distincte (8) rejoigne en aval dudit séparateur vortex (2) le flux issu de ce séparateur.

2. Dispositif selon la revendication 1, caractérisé en ce que ladite chambre (1) est une chambre de séparation par densité.

3. Dispositif selon la revendication 1 ou 2, caractérisé en ce que ladite chambre (1) présente en outre dans sa partie supérieure une sortie reliée au purgeur d'air (3).

4. Dispositif selon l'une des revendications 1 à 3, caractérisé en ce qu'il présente des moyens de réglage du rapport entre d'une part le débit entre ladite chambre de séparation (1) et ledit séparateur vortex (2) et d'autre part le débit entre ladite chambre de séparation (1) et lesdits moyens de refoulement (12).

5. Procédé de dégazage d'un fluide, par formation d'un tourbillon dans ledit fluide, caractérisé en ce que le fluide à dégazer est d'abord séparé en un flux faiblement chargé en gaz et en un flux fortement chargé en gaz, et en ce que seul le flux fortement chargé en gaz est dégazé par formation d'un tourbillon dans une chambre (2), les dits flux ne se rejoignant qu'en aval de ladite chambre (2).

6. Procédé selon la revendication 5, caractérisé en ce que ledit flux faiblement chargé en gaz est séparé par densité dudit flux fortement chargé en gaz.

## Claims

1. Device for degasing a fluid, comprising inlet means (4) for a fluid to be degassed and discharge means (12) for degassed fluid, a vortex separator (2) the outlet of which is linked to said discharge means (12), air purging means (3) being arranged thereover, said degassing device being characterized in that it further comprises a separation chamber (1), separated from said vortex separator (2), the inlet of which is linked to said inlet means (4) for fluid to be degassed and having at least one separate outlet (8) linked to an inlet of said vortex separator (2), and an outlet linked to said discharge means (12) whereby in operation, the flow leaving said separate outlet (8) unites, downstream of said vortex separator (2), with the flow from said separator.

2. Device according to claim 1, characterized in that said chamber (1) is a separation chamber using density.

3. Device according to claim 1 or 2, characterized in that said chamber (1) further has, in its upper portion, an outlet linked to said air purger (3).

4. Device according to one of claims 1 to 3, characterized in that it includes means for regulating the ratio between, firstly, the flow between said separation chamber (1) and said vortex separator (2) and, secondly, the flow between said separation chamber (1) and said discharge means (12).

5. A method for degassing fluid, by forming a vortex in said fluid, characterized in that the fluid to be degassed is first divided into a flow having a high gas content and a flow having a low gas content, and in that only the flow having a high gas content is degassed by forming a vortex in a chamber (2), said flows not uniting until downstream of said chamber (2).

6. The method of claim 5, characterized in that said flow having a low gas content is separated, by density, from said flow having a high gas content.

## Patentansprüche

1. Vorrichtung zum Entgasen eines Fluids, umfassend Aufnahmemittel (4) für das zu entgasende Fluid und Fördermittel (12) für das entgaste Fluid, ein Vortexscheider (2), dessen Ausgang mit den Fördermitteln (12) verbunden ist, und oberhalb dessen ein Entlüftungshahn (3) angebracht ist, wobei die Vorrichtung zum Entgasen dadurch gekennzeichnet ist, daß sie darüber hinaus eine vom Vortexscheider (1) getrennte Scheidekammer (1) umfaßt, deren Eingang mit den Aufnahmemitteln (4) für das zu entgasende Fluid verbunden ist und die mindestens einen verschiedenen Ausgang (8) aufweist, der mit dem Eingang des Vortexscheiders (2) verbunden ist, und einen Ausgang, der mit den Fördermitteln (12) verbunden ist, so daß beim Betrieb der aus dem verschiedenen Ausgang (8) austretende Strom stromabwärts des Vortexscheiders (2) mit dem aus diesem Scheider austretenden Strom zusammenkommt.

2. Vorrichtung gemäß Anspruch 1, gekennzeichnet dadurch, daß die Kammer (1) eine Gleichfälligkeitsscheidekammer ist.

3. Vorrichtung gemäß Anspruch 1 oder 2, gekennzeichnet dadurch, daß diese Kammer (1) zusätzlich in ihrem oberen Teil einen mit den, Lüftungshahn verbundenen Ausgang aufweist.

4. Vorrichtung gemäß einem der Ansprüche 1 bis 3, gekennzeichnet dadurch, daß sie Mittel aufweist, um das Verhältnis des Durchsatzes zwischen der Scheidekammer (1) und dem Vortexscheider (2) einerseits zu dem Durchsatz zwischen der Scheidekammer (1) und den Fördermittels andererseits zu regeln.

5. Verfahren zum Entgasen eines Fluids, durch Wirbelbildung in dem Fluid, gekennzeichnet dadurch, daß das zu entgasende Fluid erst in einen leicht mit Gas beladenen Strom und einen stark mit Gas beladenen Strom getrennt wird, und dadurch, daß allein der stark mit Gas beladene Strom durch Wirbelbildung in einer Kammer (2) entgast wird, wobei die Ströme erst stromabwärts der Kammer (2) zusammenkommen.

6. Verfahren gemäß Anspruch 5, gekennzeichnet dadurch, daß der leicht mit Gas beladene Strom vom stark mit Gas beladenen Strom durch Gleichfälligkeitsscheidung getrennt wird.
